# EUROPÄISCHE PATENTANMELDUNG

(11) **EP 2 023 181 A1**
(43) Veröffentlichungstag der Anmeldung: **11.02.2009**
(21) Anmeldenummer: 08011757.5
(22) Anmeldetag: 28.06.2008
(51) Int. Cl.: G02B 26/08, G02B 26/06

(54) **Vorrichtung zum Schwenken eines optischen Strahls**

(30) Priorität: 03.07.2007 DE 102007030926; 17.08.2007 DE 102007039019
(71) Anmelder: Diehl BGT Defence GmbH & Co.KG, 88662 Überlingen (DE)
(72) Erfinder: Tholl, Hans Dieter, Dr., 88690 Uhldingen-Mühlhofen (DE); Rungenhagen, Matthias, 88690 Uhldingen-Mühlhofen (DE)
(74) Vertreter: Diehl Patentabteilung

(57) **Zusammenfassung**

Die Erfindung geht aus von einer Vorrichtung (2, 52) zum Schwenken eines optischen Strahls (4) mit einer Schwenkeinheit (6), die eine Anzahl von mikrooptischen Rastern (12, 14, 16, 60) zum Schwenken des Strahls (4) umfasst.

Zum Ausgleich von Strahifehlern, wie Wellenfrontabberationen oder Beugungseffekten, wird vorgeschlagen, dass die Vorrichtung (2, 52) eine adaptive optische Einrichtung (8) mit einem Phasenschieber (10, 48) zum Korrigieren von Strahlfehlern im Strahl (4) umfasst.

## Beschreibung

Die Erfindung geht aus von einer Vorrichtung zum Schwenken eines optischen Strahls mit einer Schwenkeinheit, die eine Anzahl von mikrooptischen Rastern zum Schwenken des Strahls umfasst.

Laserradare (LADAR) sind für die Hinderniswarnung und Zielerkennung, insbesondere für Luftfahrzeuge und Flugkörper, besonders gut geeignet. Für eine präzise Hinderniswarnung oder Zielerkennung ist es vorteilhaft, ein bildgebendes Verfahren anzuwenden, wobei die Objektszene in eine Matrix aus Ausschnitten aufgeteilt werden kann und die einzelnen Ausschnitte entweder parallel oder sequenziell mit hoher Geschwindigkeit abgetastet werden. Hierzu ist es notwendig, den Laserstrahl um einen großen Winkelbereich auszulenken.

Für eine Laserstrahlsteuerung mit einer weiten Auslenkung werden üblicherweise Systeme aus rotierenden Spiegeln verwendet. Mit ihnen ist eine schnelle Strahlsteuerung möglich. Eine richtungsselektive Auslenkung ist mit einer kardanischen Aufhängung möglich, wie beispielsweise aus der DE 10 2004 031 097 A1 bekannt ist. Beide Systeme sind aufgrund ihrer relativ großen Massen der bewegten Komponenten empfindlich gegenüber großen Beschleunigungen. Unempfindlicher gegen Beschleunigung sind akusto-optische Modulatoren, bei denen der Ablenkwinkel jedoch sehr eingeschränkt ist. Aus bildgebenden Vorrichtungen ohne einen aktiven Laserstrahl zur Abtastung der Objektszene sind Mikrogitter zur Ablenkung von einfallendem Licht bekannt, mit denen eine großen Ablenkung mit kleinster Bewegung erzielbar sind. Solche Mikrogitter sind z. B. aus der DE 10 2004 024 859 A1 bekannt.

Es ist die Aufgabe der vorliegenden Erfindung, eine gegenüber Beschleunigungen relativ stabile Vorrichtung zum Schwenken eines optischen Strahls anzugeben, mit der eine weite Strahlablenkung mit einer hohen Abbildungsgüte verbunden werden kann.

Diese Aufgabe wird durch eine Vorrichtung der eingangs genannten Art gelöst, die erfindungsgemäß eine adaptive optische Einrichtung umfasst mit einem Phasenschieber zum Korrigieren von Strahlfehlern im Strahl. Durch die Kombination von mikrooptischen Rastern und einem Phasenschieber kann der Strahl weit ausgelenkt werden und es können Strahlfehler, wie Wellenfrontabberationen, kompensiert werden, ohne massereiche Elemente beweglich halten zu müssen.

Zur Richtungssteuerung des optischen Strahls können die gegeneinander verschiebbaren mikrooptischen Raster verwendet werden, wodurch eine weite Strahlauslenkung zweidimensional über ein Gesichtsfeld bzw. in eine Objektszene mit einer sehr geringen Bewegung erreicht werden kann. Es hat sich jedoch gezeigt, dass die Abtastung einer Objektszene mit mikrooptischen Rastern üblicherweise mit störenden Strahlfehlern behaftet ist. Solche Strahlfehler können durch die mikrooptischen Raster selbst hervorgerufen sein. Bei der Herstellung von mikrooptischen Linsen der mikrooptischen Raster rufen kleine Baufehler, wie geringe Linsenfehler oder geringe Abweichung von einer exakten gegenseitigen Positionierung, bereits Wellenfrontabberationen hervor, also Formfehler in Wellenfronten, die das Abtastverfahren erheblich stören. Strahlfehler können jedoch auch durch die mikrooptischen Raster hervorgerufene Beugungseffekte oder Wellenfrontabberationen durch atmosphärische Störungen, beispielsweise durch heiße Abgase, sein.

Durch die Verwendung eines Phasenschiebers in Verbindung mit den mikrooptischen Rastern kann Strahlfehlern entgegengewirkt und die Qualität der Abtastung einer Objektszene verbessert werden. Den Strahlfehlern kann entgegengewirkt werden indem der Strahl - insbesondere vor dem Aufprägen der Strahlfehler - so moduliert wird, dass die eingebrachten Strahlfehler zu einer geringeren Störung in einer Auswertungsabbildung führen als ohne Modulation.

Die mikrooptischen Raster und der Phasenschieber bilden eine so genannte adaptive Optik, die in der Lage ist, den Strahl an Wellenfrontfehler bzw. Strahlfehler so zu adaptieren, also anzupassen, dass diesen zumindest entgegengewirkt wird, diese also möglichst weitgehend ausgeglichen werden. Die Vorrichtung wird durch den Phasenschieber somit eine Vorrichtung zum adaptiven Schwenken. Sie kann als Strahlführungseinheit beispielsweise in Laserscannern, Laserradaren, (LADAR) und so genannten "Directed Infrared Counter Measures" (DIRCM) verwendet werden.

Als optischer Strahl wird im Nachfolgenden ein Strahl aus elektromagnetischer Strahlung im sichtbaren, infraroten und ultravioletten Spektralbereich verstanden, vorzugsweise ein Laserstrahl. Es kann auch ein aus einer Objektszene einfallender Strahl sein. Der Phasenschieber kann eine Vorrichtung sein, die im Bereich der mikrooptischen Raster eine räumlich variable, also durch teilbereichsweise Ansteuerung getrennt erzeugte, Phasenmodulation zulässt. Der Phasenschieber ist zweckmäßigerweise im Strahlengang vor der Schwenkeinheit angeordnet. Die Korrektur der Strahlfehler im Strahl muss nicht vollständig erfolgen, eine teilweise Korrektur, insbesondere eine weitgehende Korrektur ist ausreichend.

In einer vorteilhaften Ausführungsform der Erfindung sind die mikrooptischen Raster Mikrolinsenfelder. Sie sind trägheitslos und elektronisch steuerbar und es sind große Stellgenauigkeiten und hohe räumliche Auflösungen realisierbar. Außerdem können große Ablenkwinkel erzielt werden. Die Mikrolinsenfelder sind zweckmäßigerweise lateral gegeneinander verschiebbar und bilden afokale Systeme (Teleskope). Durch die laterale Verschiebung wird ein darauf einfallender optischer Strahl abgelenkt. Insbesondere sind die Mikrolinsenfelder nach Art eines Blazegitters ausgeführt.

Als Ausführungsform für den Phasenschieber ist eine Anzahl von bekannten "tipp/tilt"-Spiegeln, also zweidimensional kippbaren Spiegeln, denkbar. Auch ein Membranspiegel, bei dem die teilbereichsweise getrennt ansteuerbare Phasenmodulation durch Aktuatoren zur Deformation der Membranoberfläche erreicht wird ist möglich. Besonders vorteilhaft, weil insbesondere frei von makroskopischen beweglichen Elementen, ist jedoch ein Phasenschieber, der zu einer Phasenmodulation des Strahls bei einem Durchtritt des Strahls durch ein eigenschaftsveränderliches optisches Material vorgesehen ist. Es kann auf Basis von Flüssigkristallen, elektrooptischen, akustooptischen, thermooptischen oder fluidooptischen Materialien realisiert sein.

Variationen der optischen Parameter der einzelnen Mikrolinsen innerhalb eines Mikrolinsenfelds führen zu einer verringerten räumlichen Kohärenz der interferierenden Teilbündel der einzelnen Rasterzellen der Schwenkeinheit und damit zu einer vergrößerten Strahldivergenz. Diesem Problem kann entgegengewirkt werden und es kann eine hohe Abbildungsgenauigkeit erzielt werden, wenn die adaptive optische Einrichtung zum Anpassen des Strahls an solche Wellenfrontabberationen ausgeführt ist, die von der Schwenkeinheit verursacht werden, insbesondere durch Herstellungsungenauigkeiten der mikrooptischen Raster.

Insbesondere hierfür weist der Phasenschieber mit Vorteil rasterförmig angeordnete und zumindest weitgehend unabhängig voneinander ansteuerbare Schiebeelemente auf, wobei jeder Rasterzelle eines mikrooptischen Rasters zumindest ein Schiebeelement zugeordnet ist. Auf diese Weise können Abberationen kleiner bis mittlerer Raumfrequenz korrigiert werden, die sich über mehrere Rasterzellen eines mikrooptischen Rasters erstrecken bzw. in der Größe einer Rasterzelle liegen, unter anderem Offsetfehler, die z. B. durch verschieden dick ausgeführte Linsen hervorgerufen werden.

Insbesondere hierfür umfasst die Vorrichtung zweckmäßigerweise eine Steuereinheit, die dazu vorgesehen ist, den Phasenschieber derart anzusteuern, dass Offsetfehler in Wellenfronten aus einzelnen Rasterelementen der Schwenkeinheit zumindest weitgehend ausgeglichen sind. Unter "weitgehend" bzw. "im Wesentlichen" kann hier und im Folgenden ein Ausgleich von zumindest 70% des durchschnittlichen Phasenfehlers verstanden werden.

Zum Ausgleichen von Wellenfrontabberationen, die von der Schwenkeinheit, insbesondere von den mikrooptischen Rastern hervorgerufen werden, kann die adaptive optische Einrichtung einen Detektor, ein Element zum Ausrichten des Strahls auf den Detektor und eine mit dem Detektor verbundene Steuereinheit aufweisen, die dazu vorgesehen ist, den Phasenschieber so anzusteuern, dass der Strahl so moduliert wird, dass eine von mikrooptischen Rastern erzeugte Wellenfrontabberation vor dem Element zumindest im Wesentlichen eliminiert ist.

Ein schnelles und effektives Ausgleichen von Wellenfrontabberationen kann erreicht werden, wenn die Steuereinheit dazu vorgesehen ist, die Ansteuerung im Rahmen einer Regelung durchzuführen, in der das Abbild des Strahls auf dem Detektor ausgewertet wird. Es kann ein Istbild mit einem Sollbild, z. B. einer Punktabbildung, verglichen und der Phasenschieber so geregelt werden, dass das Istbild dem Sollbild möglichst nahe kommt.

Umfasst die Vorrichtung eine Steuereinheit mit einer in einem Speicher abgelegten Kalibrationstabelle zur Steuerung des Phasenschiebers, so kann - zusätzlich oder alternativ zu einer Regelung - eine Steuerung des Phasenschiebers zum Ausgleich von bekannten, beispielsweise temperatur- oder auslenkwinkelabhängigen Abberationen erfolgen.

In einer weiteren, vorteilhaften Ausführungsform der Erfindung umfasst der Phasenschieber rasterförmig angeordnete und zumindest weitgehend unabhängig voneinander ansteuerbare Schiebeelemente, wobei jeder Rasterzelle eines mikrooptischen Rasters mehrere Schiebeelemente zugeordnet sind. Es sind Abberationen großer Raumfrequenz korrigierbar, die kleiner als eine Rasterzelle sind, also Variationen innerhalb einer Rasterzelle bilden, und z. B. durch eine fehlerhafte Variation der Brennweiten der Mikrolinsen oder andere Oberflächenungenauigkeiten der Mikrolinsen hervorgerufen werden.

Insbesondere hierzu umfasst die Vorrichtung vorteilhafterweise eine Steuereinheit, die dazu vorgesehen ist, den Phasenschieber derart anzusteuern, dass durch innere Baufehler einzelner Rasterelemente der Schwenkeinheit verursachte Wellenfrontabberationen zumindest weitgehend ausgeglichen sind.

Auch Strahlfehler mit an sich kleiner Raumfrequenz, wie ein Steigungsfehler in Wellenfronten aus einzelnen Rasterzellen, die zueinander fehlerhafterweise etwas versetzt zueinander angeordnet sind, können ausgeglichen werden. Hierfür umfasst die Vorrichtung vorteilhafterweise eine Steuereinheit, die dazu vorgesehen ist, den Phasenschieber derart anzusteuern, dass Steigungsfehler in Wellenfronten aus einzelnen Rasterzellen der Schwenkeinheit zumindest weitgehend ausgeglichen sind.

In einer anderen vorteilhaften Ausgestaltung der Erfindung ist die adaptive optische Einrichtung zum Anpassen des Strahls an Wellenfrontabberationen, die von externen Störungen verursacht werden, z. B. atmosphärische Störungen, ausgeführt. Es kann eine Abbildung mit hoher Genauigkeit erzielt werden, trotz z. B. heißer Abgase in Blickrichtung, die atmosphärische Störungen verursachen.

Hierfür kann die optische Einrichtung einen Detektor, ein Element zum Ausrichten des Strahls auf den Detektor und eine mit dem Detektor verbundene Steuereinheit umfassen, die dazu vorgesehen ist, den Phasenschieber so anzusteuern, dass der ausgesandte Strahl so moduliert wird, dass Wellenfrontabberationen des einfallenden Strahls trotz durchlaufener externen Störungen zumindest weitgehend eliminiert sind, wobei selbstverständlich nicht alle Störungen eliminiert sein müssen.

Umfasst die Vorrichtung eine optische Rückkopplungseinrichtung zur aktiven Regelung von Phasenschieber und insbesondere auch der Schwenkeinheit, so können Abberationen, z. B. aus atmosphärischen Störungen, schnell und effektiv ausgeglichen werden.

Ein konstruktiv einfacher und stabiler Phasenschieber kann erreicht werden, wenn die optische Einrichtung eine Anzahl von Strahlungsleitern zur Leitung von Licht von einer Strahlungsquelle zur Schwenkeinheit aufweist, und in jedem der Strahlungsleiter ein Schiebeelement des Phasenschiebers angeordnet ist. Zweckmäßigerweise sind hierbei Rasterzellen der mikrooptischen Raster jeweils mehrere Lichtleiter zugeordnet, so dass Abberationen großer Raumfrequenz ausgeglichen werden können.

Weist die Strahlungsquelle eine Anzahl von Strahlungselementen auf, wobei je einer Gruppe von Strahlungsleitern, insbesondere jedem Strahlungsleiter, ein Strahlungselement zugeordnet ist, so kann eine hohe Strahlintensität erzielt werden.

Vorteilhafterweise sind die Strahlungselemente bezüglich ihrer Phase einzeln ansteuerbar und bilden jeweils das Schiebeelement, so dass auf separate Schiebelemente verzichtet werden kann.

Sind Abberationen kleiner Raumfrequenz zu korrigieren, so können der Phasenschieber und die mikrooptischen Raster ohne zusätzliche Hilfsmittel in einem Strahlengang angeordnet werden. Sollen Abberationen großer oder aller Raumfrequenzen korrigiert werden, so ist ein Einsatz eines Objektivs zwischen der Schwenkeinheit und dem Phasenschieber vorteilhaft, wie beispielsweise ein beidseitig telezentrisches Objektiv, mit dem die Phasenstruktur des Phasenschiebers auf die Eintrittspupille der Schwenkeinheit abbildbar ist. Die Phasenstruktur des Phasenschiebers ist auf die Eintrittpupille eines mikrooptischen Rasters abbildbar, bzw. auf die Fläche, welche Teilpupillen der optischen Funktionseinheiten des Rasters umfassen.

Schiebeelemente des Phasenschiebers können unmittelbar fest mit Rasterelementen eines mikrooptischen Rasters verbunden sein, wodurch eine kompakte Vorrichtung erreicht werden kann.

Die Erfindung ist zusätzlich gerichtet auf ein Verfahren zum Schwenken eines optischen Strahls mittels einer Schwenkeinheit mit einer Anzahl von mikrooptischen Rastern zum Schwenken des Strahls. Es wird vorgeschlagen, dass mittels einer adaptiven optischen Einrichtung mit einem Phasenschieber der Strahl derart an Strahlfehler im Strahl angepasst wird, dass den Strahlfehler entgegengewirkt wird.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine Vorrichtung zum adaptiven Schwenken eines optischen Strahls mit einer Schwenkeinheit und einer adaptiven optischen Einrichtung mit einem Phasenschieber in einer schematischen Darstellung,
- Fig. 2: die Vorrichtung mit einem beidseitig telezentrischen Objektiv,
- Fig. 3: eine schematische Darstellung von Stellungen des Phasenschiebers,
- Fig. 4: eine andere Darstellung von Stellungen eines Phasenschiebers bei fehlerhaft zueinander versetzten Mikrolinsen,
- Fig. 5: eine weitere Darstellung von Stellungen eines Phasenschiebers bei inneren Baufehlern der Mikrolinsen,
- Fig. 6: eine Vorrichtung zum adaptiven Schwenken eines optischen Strahls mit einer Regeleinheit zur Regelung des Phasenschiebers,
- Fig. 7: eine Darstellung eines moduliert ausgesandten und reflektierten optischen Strahls,
- Fig. 8: eine Schwenkeinheit mit vorgeschalteten Lichtleitern, die jeweils ein Schiebeelement beherbergen,
- Fig. 9: in ihrer Phase steuerbare Faserlaser vor einer Schwenkeinheit und
- Fig. 10: eine Anordnungsdarstellung von Lichtleitern an einer Rasterzelle.

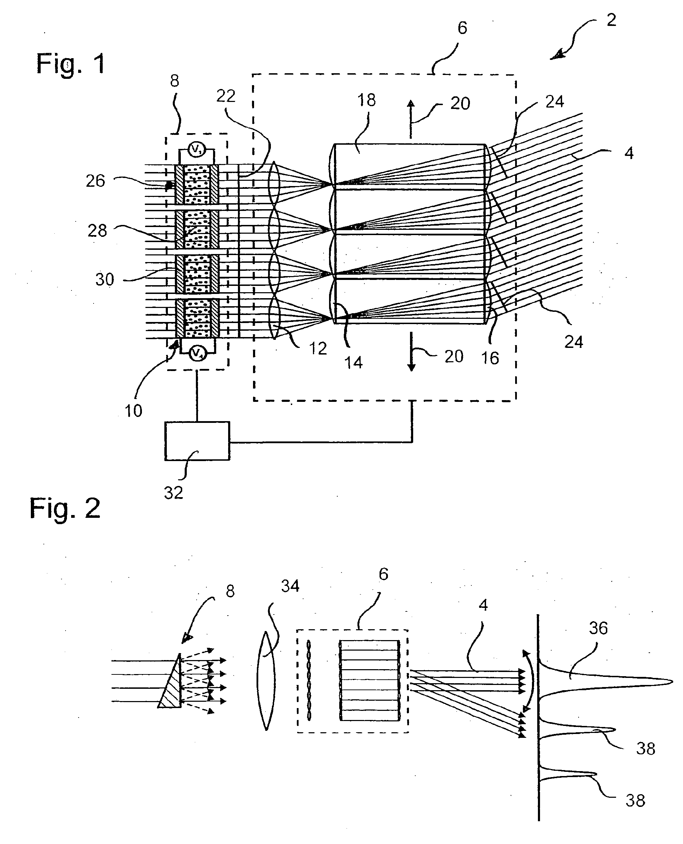

Fig. 1 zeigt eine Vorrichtung 2 zum adaptiven Schwenken eines von einem Infrarotlaser ausgesandten optischen Strahls 4 mit einer Schwenkeinheit 6 und einer adaptiven optischen Einrichtung 8 mit einem Phasenschieber 10 in einer schematischen Darstellung. Die Schwenkeinheit 6 umfasst drei als Mikrolinsenfelder ausgeführte mikrooptische Raster 12, 14, 16, von denen die Raster 14, 16 an einem strahlungsdurchlässigen Substrat 18 befestigt sind und mit einem Aktuator gemeinsam lateral gegenüber dem Raster 12 verschiebbar sind, wie durch die Pfeile 20 angedeutet ist. Die Raster 12, 14, 16 umfassen jeweils 256 x 256 Mikrolinsen der Größe von einigen bis vielen 10 µ**,** wobei von jedem Raster 12, 14, 16 eine Mikrolinse, also immer drei Mikrolinsen jeweils einander zugeordnet sind und ein afokales System (Teleskop) bilden. Das Raster 14 ist hierbei in der Zwischenbildebene angeordnet. Durch eine laterale Verschiebung der Raster 14, 16 wird eine Wellenfront 22 und damit der optische Strahl 4 abgelenkt, wie durch die Wellenfronten 24 dargestellt ist.

Der Phasenschieber 10 umfasst 256 x 256 rasterförmig angeordnete und unabhängig voneinander ansteuerbare Schiebeelemente 26, so dass jeder Rasterzelle der Mikroraster 12, 14, 16 ein Schiebeelement 26 zugeordnet ist. Jede Rasterzelle birgt eine Mikrolinse von jedem der Raster 12, 14, 16, so dass jeder Rasterzelle ein afokales System zugeordnet ist. Jedes der Schiebeelemente 26 weist in seinem Inneren eigenschaftsveränderliches optisches Material 28 auf, das je nach elektrischer Spannung zwischen zwei elektrischen Kontaktierungen 30 den durch das Material 28 durchtretenden Strahl in seiner Phase verschieden beeinflusst. Die elektrischen Spannungen, beispielhaft sind in Fig. 1 V₁ und V₄ angegeben, werden von einer Steuereinheit 32 eingestellt, die mit allen Schiebeelementen 26 einzeln verbunden ist. Der Phasenschieber kann z. B. ein so genannter Spatial-Light-Modulator (SLM) sein, wobei sich Flüssigkristall-Modulatoren besonders gut für den Nahinfrarotbereich von 0,9 µm bis 1,7 µm eignen und in der Größe von weniger als 8 µm hergestellt werden können, so dass sie sich auch dazu eignen, im Verbund von beispielsweise 8 x 8 Schiebeelementen pro Rasterzelle verwendet zu werden. Für den mittleren Infrarot bereich von 3 µm bis 5 µm können Mikrospiegel oder elektro-optische Keramiken verwendet werden.

In Fig. 2 ist die Vorrichtung 2 mit einem beidseitig telezentrischen Objektiv 34 dargestellt, das der Übersichtlichkeit halber in Fig. 1 weggelassen wurde, mit dem die Phasenstruktur des Phasenschiebers 10 auf die Eintrittspupille der Schwenkeinheit 6 abbildbar ist. Hierdurch können auch Wellenfrontabberationen mit einer hohen Raumfrequenz korrigiert werden.

Wie in Fig. 2 dargestellt, bildet der geschwenkte und ausgesandte Strahl 4 ein durch die Gitterstruktur der mikrooptischen Raster 12, 14, 16 verursachtes Beugungsmuster mit einem Hauptreflex 36 und Nebenreflexen 38 höherer Ordnungen. Zwar sind die Raster 12, 14, 16 nach Art eines Blazegitters ausgeführt, doch durch sie alleine ist der Strahl 4 nicht befriedigend zwischen die Reflexe 36, 38 führbar. Mit Hilfe des Phasenschiebers 8 kann jedoch die Wellenfront 24 so ausgerichtet werden, dass der Strahl 4 zwischen die Ordnungen geführt werden kann und so eine kontinuierliche Ablenkung des Strahls 4 ohne einen beweglichen Spiegel ermöglicht wird. Der Phasenschieber 10 wirkt hierbei z. B. wie ein Phasenkeil, wie in Fig. 2 beispielhaft dargestellt ist. In diesem Beispiel wird der Strahl 4 nach unten in Richtung der ersten Beugungsordnung abgelenkt, bei einer Veränderung des Keils ist eine Ablenkung nach oben möglich.

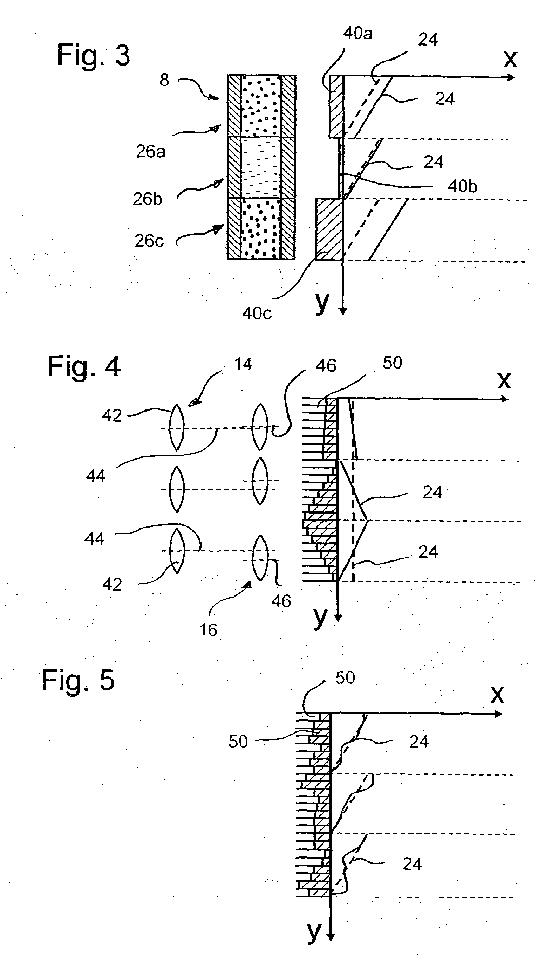

In Fig. 3 ist schematisch ein Ausschnitt des Phasenschiebers 8 mit drei Schiebeelementen 26a, 26b. 26c dargestellt. Durch die Schwenkeinheit 6 soll die Wellenfront 24 wie gestrichelt dargestellt verkippt werden. Durch Herstellungstoleranzen sind die Mikrolinsen der Raster 12, 14, 16 jedoch verschieden dick, so dass die Wellenfronten 24 ohne den Einsatz des Phasenschiebers 8 zwar korrekt verkippt wären aber mit einem fehlerhaften Offset versehen sind, der in Fig. 3 anhand der durchgezogenen Darstellung der Wellenfronten 24 angedeutet ist. Da jedem afokalen System ein Schiebeelement 26a-c zugeordnet ist, kann der Offsetfehler für jedes System einzeln korrigiert werden. Hierzu wird das eigenschaftsveränderliche optische Material 28 so angesteuert, dass es einen Phasenschub 40a, 40b, 40c erzeugt, so dass der Offsetfehler ausgeglichen wird und die Wellenfront 24 des Strahls 4 die gewünschte und gestrichelt dargestellte Position einnimmt.

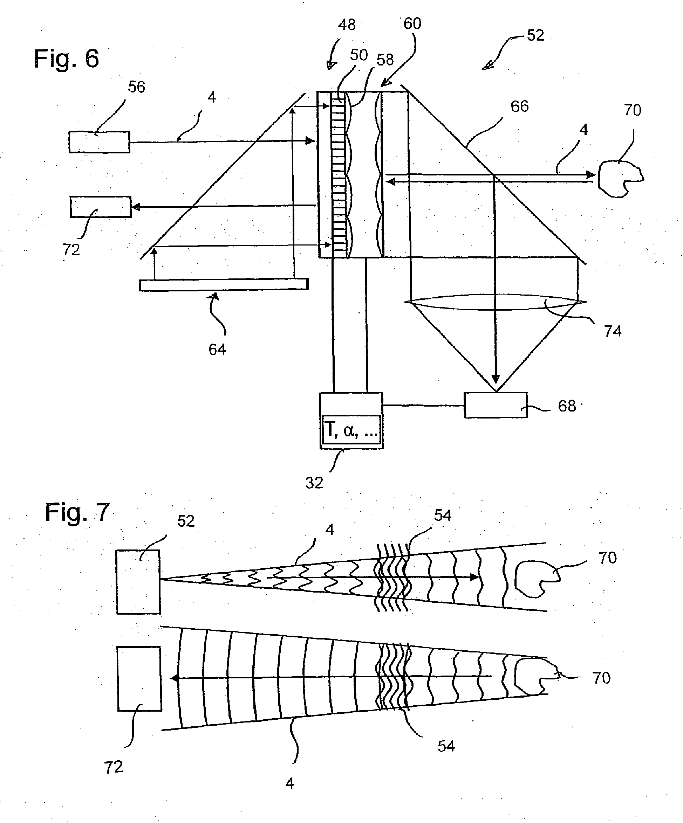

In Fig. 4 ist die Korrektur von Steigungsfehlern der Wellenfront 24 dargestellt. Mikrolinsen 42 der Raster 14, 16 sind idealerweise auf einer Achse 44 zentriert. Durch Herstellungstoleranzen kann es sein, dass die optische Achse 46 einer Mikrolinse 42 von der Achse 44 abweicht. Hierdurch wird der jeweilige Strahlausschnitt von der betreffenden Mikrolinse 42 unerwünschterweise geschwenkt bzw. die jeweilige Wellenfront 24 weist eine Steigung auf, die gegenüber der gewünschten, gestrichelt dargestellten Steigung fehlerhaft ist. Zum Ausgleich solcher Fehler kann ein Phasenschieber 48 (s. Fig. 6) vorgesehen sein, bei dem jeweils eine Mehrzahl von Schiebeelementen 50 einer Rasterzelle bzw. einem afokalen System zugeordnet ist. Jedes dieser Schiebeelemente 50 ist eigenständig von der Steuereinheit 32 ansteuerbar. Bei dem in Fig. 4 dargestellten Beispiel sind einer Mikrolinse 42 jeweils 8 x 8 Schiebeelemente 50 zugeordnet.

Bei der in Fig. 4 in oberster Position dargestellter Mikrolinse 42 weichen die Achsen 44, 46 nur wenig voneinander ab, so dass die Schiebeelemente 50 nur wenig in ihrer Phase schiebenden Wirkung voneinander abweichen. Bei den darunter liegenden Mikrolinsen 42 ist die Abweichung größer, wobei die daraus resultierende fehlerhafte Steigung der Wellenfronten 24 durch den eingestellten Zustand der Schiebeelemente 50 - bis auf eine nicht dargestellte leichte Stufenform der Wellenfronten 24 - ausgeglichen wird.

Bei den in Fig. 5 dargestellten Schiebeelementen 50 des Phasenschiebers 48 werden die Wirkungen innerer Baufehler einzelner Rasterelemente korrigiert, wie z. B. fehlerhafte Außenflächen der Mikrolinsen 42 oder innere Schwankungen der optischen Eigenschaften der Mikrolinsen 42. Auch in diesem Ausführungsbeispiel sind jeder Mikrolinse 42 jeweils 8 x 8 Schiebeelemente 50 zugeordnet. Durch die Baufehler sind die Wellenfronten 24 durch die Mikrolinsen 42 unregelmäßig gekrümmt und werden durch die Schiebeelemente 50 vorab so gegengekrümmt, dass die Wellenfronten 24 im Wesentlichen gerade - wie die gestrichelten Linien andeuten - die Mikrolinsen 42 verlassen.

In Fig. 6 ist schematisch eine Vorrichtung 52 zum adaptiven Schwenken eines optischen Strahls 4 dargestellt. Sie kann einige oder alle zu den vorhergehenden Figuren beschriebenen Eigenschaften und Bauteile umfassen. Die nachfolgende Beschreibung beschränkt sich im Wesentlichen auf die Unterschiede zu den Ausführungsbeispielen aus den vorhergehenden Figuren, auf deren Merkmale und Bauteile bezüglich gleich Funktionen verwiesen wird und die explizit in das nachfolgend beschriebene Ausführungsbeispiel aufgenommen sind. Die Vorrichtung 52 umfasst eine Regeleinheit zur Regelung des Phasenschiebers 48, mit dem Wellenfrontabberationen, die von externen Störungen 54 verursacht werden, ausgeglichen werden können, z. B. Wellenfrontabberationen, die von Schlieren in der Atmosphäre hervorgerufen werden, wie in Fig. 7 dargestellt ist.

Die Vorrichtung 52 weist eine Strahlungsquelle 56 in Form eines Lasers auf, dessen zunächst unmodulierter Strahl 4 durch den Phasenschieber 48 einer wie oben beschriebenen Bauart fällt. Die Schiebeelemente 50 des Phasenschiebers 48 sind direkt mit Rasterelementen 58 eines mikrooptischen Rasters 60 verbunden und an diesen befestigt. Über einen von der Steuereinheit 32 angesteuerten optischen Adressgeber 64 werden die Schiebelemente 50 des Phasenschiebers 48 in bekannter Art und Weise optisch codiert und hiermit die von den Schiebelementen 50 jeweils zu verursachenden Phasenverschiebungen eingestellt.

Der vom Phasenschieber 48 modulierte und vom Raster 60 ausgelenkte Strahl 4 wird von einem Element 66, beispielsweise einem Halbspiegel, auf einen Detektor 68 gerichtet, wobei der von der Intensität her größte Teil des Strahls 4 aus der Vorrichtung 52 heraus und z. B. auf ein Objekt 70 gelenkt wird. Von dort fällt der reflektierte Anteil des Strahls 4 wieder zurück auf die Vorrichtung 52 und wird von einem weiteren Detektor 72 registriert.

Der auf den Detektor 68 fallende Teil des modulierten Strahls 4 wird durch ein Linsensystem 74 in einem Punkt auf dem Detektor 68 abgebildet. Die Solllage des Punkts ist aus der Stellung der Rasterelemente 58 zueinander bekannt. Die Steuereinheit 32, die die Raster 60 steuert, vergleicht die Solllage mit der Istlage und der Form der Abbildung des Strahls 4 auf dem Detektor 68 und stellt den Phasenschieber 48 so ein, dass ein Punkt in Solllage auf dem Detektor 68 abgebildet wird. Hierzu umfasst die Steuereinheit 32 ein Regelprogramm, das die Signale des Detektors 68 eingangsseitig verarbeitet und ausgangsseitig mit dem Phasenschieber 48 verbunden ist. Durch die Raster 60 verursachte Strahlfehler werden somit ausgeglichen.

Zur Erleichterung der Regelung ist in der Steuereinheit 32 in einem Speicher eine Kalibrationstabelle hinterlegt, in der eine Zuordnung von physikalischen Parametern, wie Temperatur T der Vorrichtung 52, Auslenkung α der Raster 60 gegeneinander, Wellenlänge des Strahls 4, usw., zu Zuständen des Phasenschiebers 48 hinterlegt ist. Durch diese in einer Kalibration ermittelten Daten sollte die Punktdarstellung auf dem Detektor 68 durch eine entsprechende Steuerung bereits recht gut realisiert sein und kann durch die Regelung noch nachkorrigiert werden.

In Fig. 7 ist schematisch dargestellt, wie von den externen Störungen 54 verursachten Strahlfehlern entgegengewirkt werden kann. Ziel ist hierbei, dass der reflektierte Strahl 4 möglichst frei von Wellenfrontabberationen den Detektor 72 erreicht. Der Strahl 4 passiert die Störungen 54 auf dem Weg zum Objekt 70 und auf dem Weg zurück zur Vorrichtung 52 und wird jeweils von ihnen gestört. Um beim Detektor 72 einen ungestörten Strahl 4 zu erhalten, muss der Strahl 4 vom Phasenschieber 48 entgegengesetzt "vorgestört" werden. In Fig. 7 ist der Strahl 4 so dargestellt, als wenn er - anders als in Fig. 6 dargestellt - nur auf dem Hinweg zum Objekt 70 den Phasenschieber 48 passiert. "Vorgestört" verlässt der Strahl 4 die Vorrichtung 52 und wird durch die Störungen 54 "entstört", so dass er ungestört den Detektor 72 erreicht. Bei dem in Fig. 6 dargestellten Ausführungsbeispiel erreicht der Strahl 4 die Vorrichtung 52 noch teilgestört und wird durch die erneute Passage durch den Phasenschieber 48 vollständig entstört.

Das "Vorstören" bzw. vollständige Entstören geschieht mit Hilfe einer Bildverarbeitung, die das vom Detektor 72 empfangene Bild analysiert und den Phasenschieber 48 durch eine Regelung so einstellt, bis das Bild weitgehend scharf ist. Hierbei kann sich die Bildverarbeitung an Kanten oder scharfen Linien im Bild vom Objekt 70 orientieren. Die optische Rückkopplungseinrichtung zur aktiven Regelung des Phasenschiebers 48 muss hierbei so schnell sein, dass im Zeitbereich von Änderungen der Störungen 54, also innerhalb von 0,1 s, durch die Regelung scharfe Bilder erreichbar sind.

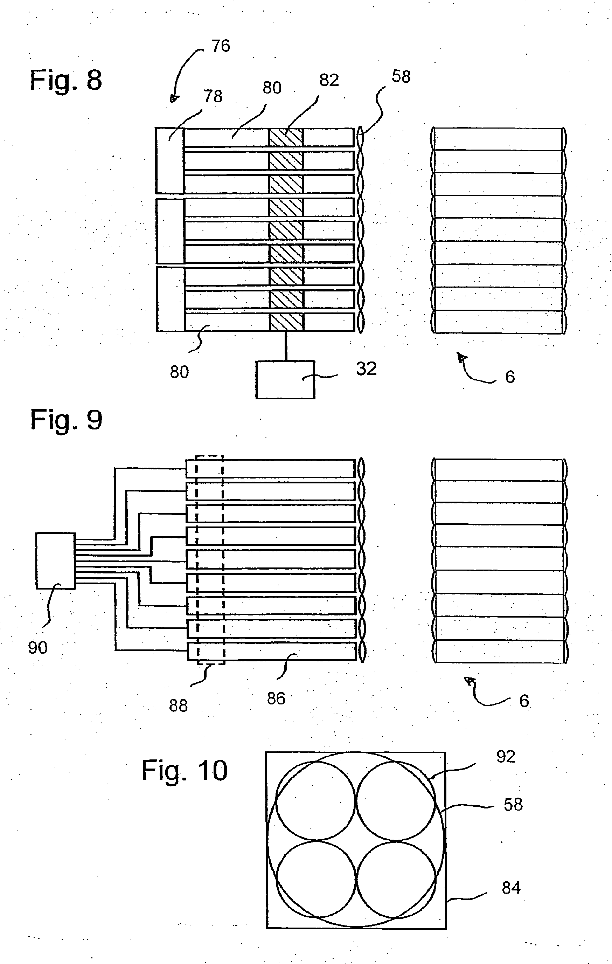

In Fig. 8 ist eine Möglichkeit zur Strahlleitung aus einer Strahlungsquelle 76 zur Schwenkeinheit 6 dargestellt. Die Strahlungsquelle 76 umfasst mehrere Strahlungselemente 78 in Form von einzelnen Lasern, in denen Infrarotlicht erzeugt und über Strahlungsleiter 80 zur Schwenkeinheit 6 geführt wird, wobei z. B. jedem Strahlungselement 78 mehrere Strahlungsleiter 80 zugeordnet sind und jedem Rasterelement 58 bzw. jeder Rasterzelle 84 (Fig. 10) ein Strahlungsleiter 80 zugeordnet ist. Jeder Strahlungsleiter 80 umfasst ein Schiebeelement 82 auf, das von der Steuereinheit 32 angesteuert werden kann, so dass alle Schiebeelemente 82 unabhängig voneinander angesteuert werden können. Auf diese Weise können Wellenfrontabberationen, wie z. B. zu Fig. 3 erläutert, ausgeglichen werden.

Bei dem in Fig. 9 dargestellten Ausführungsbeispiel sind Strahlungsleiter 86 als so genannte Faserlaser ausgeführt und bilden eigene Strahlungsquellen. Zur Triggerung sind sie mit einer zentralen Strahlungsquelle 88 verbunden, sie sind jedoch in Grenzen individuell von einer Steuereinheit 90 in ihrer Phase einstellbar und bilden somit gleichzeitig Schiebeelemente.

Abweichend von den in den Figuren 8 und 9 dargestellten Ausführungsbeispielen sind in Fig. 10 jeweils vier Strahlungsleiter 92 einem Rasterelement 58 in einer Rasterzelle 84 zugeordnet, so dass je Rasterelement 58 2 x 2 Schiebeelemente 82 bzw. Faserlaser zum zumindest teilweisen Ausgleich von Strahlstörungen zur Verfügung stehen.

### Bezugszeichenliste

- 2: Vorrichtung
- 4: Strahl
- 6: Schwenkeinheit
- 8: Einrichtung
- 10: Phasenschieber
- 12: Mikrooptisches Raster
- 14: Mikrooptisches Raster
- 16: Mikrooptisches Raster
- 18: Substrat
- 20: Pfeil
- 22: Wellenfront
- 24: Wellenfront
- 26: Schiebeelement
- 26a-c: Schiebeelement
- 28: Material
- 30: Kontaktierung
- 32: Steuereinheit
- 34: Objektiv
- 36: Hauptreflex
- 38: Nebenreflex
- 40a-c: Phasenschub
- 42: Mikrolinse
- 44: Achse
- 46: Achse
- 48: Phasenschieber
- 50: Schiebeelement
- 52: Vorrichtung
- 54: Störung
- 56: Strahlungsquelle
- 58: Rasterelement
- 60: Raster
- 64: Adressgeber
- 66: Element
- 68: Detektor
- 70: Objekt
- 72: Detektor
- 74: Linsensystem
- 76: Strahlungsquelle
- 78: Strahlungselement
- 80: Strahlungsleiter
- 82: Schiebeelement
- 84: Rasterzelle
- 86: Strahlungsleiter
- 88: Strahlungsquelle
- 90: Steuereinheit
- 92: Strahlungsleiter

## Patentansprüche

1. Vorrichtung (2, 52) zum Schwenken eines optischen Strahls (4) mit einer Schwenkeinheit (6), die eine Anzahl von mikrooptischen Rastern (12, 14, 16, 60) zum Schwenken des Strahls (4) umfasst,
**gekennzeichnet,**
**durch** eine adaptive optische Einrichtung (8) mit einem Phasenschieber (10, 48) zum Korrigieren von Strahlfehlern im Strahl (4).

2. Vorrichtung (2, 52) nach Anspruch 1,
**dadurch gekennzeichnet,**
**dass** die mikrooptischen Raster (12, 14, 16, 60) Mikrolinsenfelder sind und/oder
**dass** der Phasenschieber (10, 48) zur Phasenmodulation bei einem Durchtritt des Strahls (4) durch ein eigenschaftsveränderliches optisches Material (28) vorgesehen ist.

3. Vorrichtung (2, 52) nach einem der vorhergehenden Ansprüche,
**dadurch gekennzeichnet,**
**dass** der Phasenschieber (10, 48) rasterförmig angeordnete und zumindest weitgehend unabhängig voneinander ansteuerbare Schiebeelemente (26, 26a-c, 50, 82) aufweist, und jeder Rasterzelle (84) eines mikrooptischen Rasters (12, 14, 16, 60) zumindest ein Schiebeelement (26, 26a-c, 50, 82) zugeordnet ist oder mehrere Schiebeelemente (26, 26 a - c, 50, 82) zugeordnet sind.

4. Vorrichtung (2, 52) nach einem der vorhergehenden Ansprüche,
**gekennzeichnet**
**durch** eine Steuereinheit (32, 90), die dazu vorgesehen ist, den Phasenschieber (10, 48) derart anzusteuern, dass Offsetfehler in Wellenfronten (24) aus einzelnen Rasterelementen (58) der Schwenkeinheit (6) zumindest weitgehend ausgeglichen sind.

5. Vorrichtung (2, 52) nach einem der vorhergehenden Ansprüche,
**dadurch gekennzeichnet,**
**dass** die adaptive optische Einrichtung (8) einen Detektor (68, 72), ein Element (66) zum Ausrichten des Strahls (4) auf den Detektor (68, 72) und eine mit dem Detektor (68, 72) verbundene Steuereinheit (32, 90) aufweist, die dazu vorgesehen ist, den Phasenschieber (10, 48) so anzusteuern, dass der Strahl (4) so moduliert wird, dass eine von mikrooptischen Rastern (12, 14, 16, 60) erzeugte Wellenfrontabberation vor dem Element (66) zumindest im Wesentlichen eliminiert ist, und bevorzugt dazu vorgesehen ist, die Ansteuerung im Rahmen einer Regelung durchzuführen, in der das Abbild des Strahls (4) auf dem Detektor (68, 72) ausgewertet wird.

6. Vorrichtung (2, 52) nach einem der vorhergehenden Ansprüche,
**gekennzeichnet**
**durch** eine Steuereinheit (32, 90) mit einer in einem Speicher abgelegten Kalibrationstabelle zur Steuerung des Phasenschiebers (10, 48).

7. Vorrichtung (2, 52) nach einem der vorhergehenden Ansprüche,
**gekennzeichnet**
**durch** eine Steuereinheit (32, 90), die dazu vorgesehen ist, den Phasenschieber (10, 48) derart anzusteuern, dass durch innere Baufehler einzelner Rasterelemente (58) der Schwenkeinheit (6) verursachte Wellenfrontabberationen zumindest weitgehend ausgeglichen sind und/oder
dass Steigungsfehler in Wellenfronten (24) aus einzelnen Rasterzellen (84) der Schwenkeinheit (6) zumindest weitgehend ausgeglichen sind.

8. Vorrichtung (2, 52) nach einem der vorhergehenden Ansprüche,
**dadurch gekennzeichnet,**
**dass** die adaptive optische Einrichtung (8) zum Anpassen des Strahls (4) an Wellenfrontabberationen, die von externen Störungen verursacht werden, ausgeführt ist.

9. Vorrichtung (2, 52) nach einem der vorhergehenden Ansprüche,
**dadurch gekennzeichnet,**
**dass** die optische Einrichtung (8) einen Detektor (72), ein Element zum Ausrichten des Strahls (4) auf den Detektor (72) und eine mit dem Detektor (72) verbundene Steuereinheit (32, 90) aufweist, die dazu vorgesehen ist, den Phasenschieber (10, 48) so anzusteuern, dass der ausgesandte Strahl (4) so moduliert wird, dass Wellenfrontabberationen des einfallenden Strahls (4) trotz durchlaufener externen Störungen (54) zumindest weitgehend eliminiert sind.

10. Vorrichtung (2, 52) nach einem der vorhergehenden Ansprüche,
**gekennzeichnet**
**durch** eine optische Rückkopplungseinrichtung zur aktiven Regelung von Phasenschieber (10, 48) und insbesondere auch der Schwenkeinheit (6).

11. Vorrichtung (2, 52) nach einem der vorhergehenden Ansprüche,
**dadurch gekennzeichnet,**
**dass** die optische Einrichtung (8) eine Anzahl von Strahlungsleitern (80) zur Leitung von Licht von einer Strahlungsquelle (76) zur Schwenkeinheit (6) aufweist, und in jedem der Strahlungsleiter (80) ein Schiebeelement (26, 26a-c, 50, 82) des Phasenschiebers (10, 48) angeordnet ist.

12. Vorrichtung (2, 52) nach Anspruch 15,
**dadurch gekennzeichnet,**
**dass** Rasterzellen der mikrooptischen Raster (12, 14, 16, 60) jeweils mehrere Strahlungsleiter (80) zugeordnet sind und/oder
**dass** die Strahlungsquelle (76) eine Anzahl von Strahlungselementen (78) aufweist, wobei je einer Gruppe von Strahlungsleitern (80), insbesondere jedem Strahlungsleiter (80), ein Strahlungselement (78) zugeordnet ist, wobei die
die Strahlungselemente (78) vorzugsweise bezüglich ihrer Phase einzeln ansteuerbar sind und jeweils das Schiebeelement (26, 26a-c, 50, 82) bilden.

13. Vorrichtung (2, 52) nach einem der vorhergehenden Ansprüche,
**dadurch gekennzeichnet,**
**dass** zwischen der Schwenkeinheit (6) und dem Phasenschieber (10, 48) ein Objektiv angeordnet ist, insbesondere ein beidseitig telezentrisches Objektiv (34), mit dem die Phasenstruktur des Phasenschiebers (10, 48) auf die Eintrittspupille der Schwenkeinheit (6) abbildbar ist.

14. Vorrichtung (52) nach einem der vorhergehenden Ansprüche,
**dadurch gekennzeichnet,**
**dass** Schiebeelemente (50) des Phasenschiebers (48) unmittelbar fest mit Rasterelementen (58) eines mikrooptischen Rasters (60) verbunden sind.

15. Verfahren zum Schwenken eines optischen Strahls (4) mittels einer Schwenkeinheit (6) mit einer Anzahl von mikrooptischen Rastern (12, 14, 16, 60) zum Schwenken des Strahls (4),
**dadurch gekennzeichnet,**
**dass** mittels einer adaptiven optischen Einrichtung (8) mit einem Phasenschieber (10, 48) der Strahl (4) derart an Strahlfehler im Strahl (4) angepasst wird, dass diesen entgegengewirkt wird.
